(19) Europäisches Patentamt

European Patent Office

Office européen des brevets

(11) Veröffentlichungsnummer: **0 270 919 B1**

(12) **EUROPÄISCHE PATENTSCHRIFT**

(45) Veröffentlichungstag der Patentschrift: **17.03.93**

(21) Anmeldenummer: **87117353.0**

(22) Anmeldetag: **25.11.87**

(51) Int. Cl.⁵: **C08F 10/00**, C08F 4/62, C08F 4/02

(54) **Verfahren zum Herstellen von griessförmigem Homo- sowie Copolymerisaten des Ethens mittels eines Chromtrioxid-Katalysators.**

(30) Priorität: **28.11.86 DE 3640802**

(43) Veröffentlichungstag der Anmeldung:
**15.06.88 Patentblatt 88/24**

(45) Bekanntmachung des Hinweises auf die
Patenterteilung:
**17.03.93 Patentblatt 93/11**

(84) Benannte Vertragsstaaten:
**AT BE DE FR GB IT NL**

(56) Entgegenhaltungen:
**EP-A- 0 050 902**
**DE-A- 2 540 277**

(73) Patentinhaber: **BASF Aktiengesellschaft
Carl-Bosch-Strasse 38
W-6700 Ludwigshafen(DE)**

(72) Erfinder: **Hemmerich, Rainer, Dr.
Veilchenweg 9
W-6719 Gruenstadt(DE)**
Erfinder: **Mueller-Mall, Rudolf, Dr.
Ulmenweg 39
W-6708 Neuhofen(DE)**
Erfinder: **Schweier, Guenther, Dr.
Friedrich-Pietzsch-Strasse 14
W-6701 Friedelsheim(DE)**
Erfinder: **Gropper, Hans, Dr.
Sternstrasse 155
W-6700 Ludwigshafen(DE)**

**Beschreibung**

Die vorliegende Erfindung liegt im Rahmen eines Verfahrens zum Herstellen von grießförmigen Ethen-Homopolymerisaten sowie Ethen-Copolymerisaten mit untergeordneten Mengen an einpolymerisierten $C_3$- bis $C_{12}$-, insbesondere $C_3$- bis $C_8$-$\alpha$-Monoolefinen durch Polymerisation des bzw. der Monomeren bei Temperaturen von 30 bis 150, insbesondere 60 bis 120°C und Drücken von 2 bis 150, insbesondere von 5 bis 60 bar, mittels eines Chromtrioxid-Katalysators, der erhalten wird, indem man

(1) einen feinteiligen, porösen, aus Siliziumdioxid bestehenden bzw. auf Siliziumdioxid basierenden Trägerstoff mit

(2) Chromtrioxid oder einer unter den Bedingungen der Stufe (3) in Chromtrioxid übergehenden Chromverbindung im Gewichtsverhältnis Trägerstoff : Chrom von 100 : 0,1 bis 100 : 10, insbesondere von 100 : 0,3 bis 100 : 3, belädt, und dann

(3) das aus Stufe (2) resultierende Zwischenprodukt in einem wasserfreien, Sauerstoff in einer Konzentration von über 10, insbesondere über 20 Volumenprozent enthaltenden Gasstrom 10 bis 1000, insbesondere 120 bis 720 Minuten auf einer Temperatur von 400 bis 1100, insbesondere 600 bis 950°C, hält.

Bei diesem Verfahren ist es wichtig, daß Schwankungen in der Kornmorphologie, die mit der Korngrößenverteilung, Schüttdichte und Rieselfähigkeit beschrieben werden kann, weitgehend vermieden werden, da diese die Eigenschaften des Polymerisats in ungewollter und unkontrollierbarer Weise beeinflussen. Eine unzureichende Kornmorphologie des Polymergrießes kann die technische Beherrschung der Polymerisationssysteme z.B. durch Bildung von Wandbelägen oder durch ein instabiles Rührbett im Gasphasenprozeß nachteilig beeinflussen. Für eine optimale technische Beherrschung der verschiedenen Polymerisationssysteme werden je nach Polymerisationsverfahren unterschiedliche Anforderungen an die Korngrößenverteilung des Polymerisats gestellt. So ist für das Suspensionsverfahren eine möglichst enge, staub- und grobkornfreie Grießmorphologie von Vorteil. Für das Gasphasenverfahren sollte das Polymerisat auch staubfrei sein. Gegenüber dem Suspensionsverfahren ist im gerührten Gasphasenverfahren ein größerer mittlerer Teilchendurchmesser von Vorteil.

Verfahren der eingangs genannten Art, d.h. die Homo- sowie Copolymerisation von Ethen nach dem sogenannten Phillips-Verfahren, sind wohlbekannt und gebräuchlich; sie sind z.B. in der US-A-4 037 042 bzw. in der DE-A-29 26 231 ($\widehat{=}$ US S.N. 158,339) repräsentativ beschrieben.

In der EP-A-0 050 902 wird ein Verfahren beschrieben, wobei ein Hydrogel durch "Wiederauflösen" von Aerosil in einer Säure und Zugabe von Alkoholen erzeugt wird. In der DE-A-2 540 277 wird im Beispiel ein Verfahren beschrieben, wobei die Trägerteilchen einen Durchmesser von 40 bis 300 $\mu$m haben und mit festem Chromtrioxid gemischt werden.

Diese Verfahren haben - ebenso wie in Parallele zu setzende vergleichbare andere Polymerisationsverfahren - den Nachteil, daß die erhaltenen Polymerisate ungünstige morphologische Eigenschaften, z.B. einen hohen Staubanteil oder ein niedriges Schüttgewicht, besitzen, was für die technische Beherrschung der Polymerisationssysteme, die Aufarbeitung der Polymerisate und/oder die Verarbeitbarkeit der Polymerisate nachteilig sein kann.

Hier setzte die Aufgabe an, die zur vorliegenden Erfindung geführt hat: das Verfahren der eingangs definierten Art mit einem Chromtrioxid-Katalysator so weiterzubilden, daß bei mindestens gleichbleibend hoher Aktivität Polymerisate mit einer steuerbaren, dem jeweiligen Verfahren angepaßter, optimaler Kornmorphologie, d.h. geringen Fein- und Grobkornanteilen sowie hoher Schüttdichte und einer hohen bis mittleren Molmasse hergestellt werden können.

Es wurde gefunden, daß diese Aufgabe gelöst werden kann, wenn bei dem in Rede stehende Verfahren ein Chromtrioxid-Katalysator eingesetzt wird, dessen Trägerstoff eine bestimmte, sehr enge, und in einem bestimmten, ausgewählten Bereich liegende Korngrößenverteilung aufweist und ferner ein bestimmtes Porenvolumen sowie eine bestimmte Oberfläche besitzt.

1. Verfahren zum Herstellen von grießförmigen Ethen-Homopolymerisaten sowie Ethen-Copolymerisaten mit untergeordneten Mengen an einpolymerisierten $C_3$- bis $C_{12}$-$\alpha$-Monoolefinen durch Polymerisation des bzw. der Monomeren bei Temperaturen von 30 bis 150°C und Drücken von 2 bis 150 bar, mittels eines Chromtrioxid-Katalysators, indem man

(1)

(1.1.1) in einen unter Drall stehenden Strom einer wäßrigen Mineralsäure längs sowie tangential zum Strom eine Natrium- bzw. Kaliumwasserglaslösung einbringt,

(1.1.2) das dabei entstehende Kieselsäure-Hydrosol in ein gasförmiges Medium tropfenförmig versprüht,

(1.1.3) das versprühte Hydrosol in dem gasförmigen Medium zum Hydrogel erstarren läßt und

(1.1.4) das so erhaltene weitgehend kugelförmige Hydrogel ohne vorherige Alterung durch Waschen von Salzen befreit,

(1.2) aus dem so erhaltenen, 10 bis 25 Gew.% Feststoff (berechnet als Siliziumdioxid) enthaltenden, Kieselsäure-Hydrogel (1.1), das weitgehend kugelförmig ist und einen Teilchendurchmesser im Bereich von 1 bis 8 mm hat, mittels einer organischen Flüssigkeit aus der Reihe der $C_1$- bis $C_4$-Alkanole und/oder $C_3$- bis $C_5$-Alkanone mindestens 60 % des in dem Hydrogel enthaltenen Wassers extrahiert und

(1.3) das dabei erhaltene entwässerte, mit der organischen Flüssigkeit behandelte Gel solange trocknet, bis bei 180°C unter einem Vakuum von 10 Torr während 30 Minuten kein Gewichtsverlust mehr auftritt (Xerogel-Bildung)

und den so erhaltenen feinteiligen, porösen, aus Siliziumdioxid bestehenden bzw. auf Siliziumdioxid basierenden Trägerstoff mit

(2) Chromtrioxid oder einer unter den Bedingungen der Stufe (3) in Chromtrioxid übergehenden Chromverbindung im Gewichtsverhältnis Trägerstoff : Chrom von 100 : 0,1 bis 100 : 10 belädt, und dann

(3) das aus Stufe (2) resultierende Zwischenprodukt in einem wasserfreien, Sauerstoff in einer Konzentration von über 10 Volumenprozent enthaltenden Gasstrom 10 bis 1000 Minuten auf einer Temperatur von 400 bis 1100°C hält,

dadurch gekennzeichnet, daß

ein Chromtrioxid-Katalysator eingesetzt wird, dessen Trägerstoff (1) einen Teilchendurchmesser im Bereich von 50 bis 150 $\mu$m, ein Porenvolumen von 1 bis 3 cm$^3$/g sowie eine Oberfläche von 200 bis 600 m$^2$/g besitzt, mit der weiteren Maßgabe, daß die Differenz zwischen dem Teilchendurchmesser der größten Teilchen und dem Teilchendurchmesser der kleinsten Teilchen höchstens 50 $\mu$m beträgt und daß man in der zweiten Stufe (2) den Trägerstoff aus einer 0,05- bis 5-gew.%igen Lösung von Chromtrioxid in einem $C_3$- bis $C_5$-Alkanon oder einer 0,05- bis 15-gew.%igen Lösung einer unter den Bedingungen der Stufe (3) in Chromtrioxid übergehenden Chromverbindung in einem $C_1$-bis $C_4$-Alkanol - wobei das jeweilige Lösungsmittel nicht mehr als 20 Gew.% Wasser enthalten darf - heraus unter Verdampfen des Lösungsmittels mit der geforderten Menge Chrom belädt.

Zu dem beim erfindungsgemäßen Verfahren einzusetzenden Chromtrioxid-Katalysator ist im einzelnen noch das Folgende zu sagen:

Der Katalysator hat erfindungsgemäß zur Grundlage einen feinteiligen, porösen, aus Siliziumdioxid bestehenden bzw. auf Siliziumdioxid basierenden Trägerstoff, der einen Teilchendurchmesser im Bereich von 50 bis 150 $\mu$m, ein Porenvolumen von 1 bis 3 cm$^3$/g sowie eine Oberfläche von 200 bis 600 m$^2$/g besitzt, mit der weiteren Maßgabe, daß die Differenz zwischen dem Teilchendurchmesser der größten Teilchen und dem Teilchendurchmesser der kleinsten Teilchen höchsten 50 $\mu$m beträgt. Unter Trägerstoffen, die auf Siliziumdioxid basieren, werden dabei solche verstanden, die neben Siliziumdioxid bis zu 15 Gewichtsprozent eines oder mehrerer Oxide der Elemente Aluminium, Titan, Zirkon, Molybdän oder Vanadin enthalten.

Im Rahmen der Erfindung wird ein Chromtrioxid-Katalysator eingesetzt, der auf einem Trägerstoff (1) basiert, der - wie oben umschrieben - in vier Stufen (1.1) bis (1.4) erhalten wird.

Zu diesen Stufen ist das Nachstehende zu bemerken:

(1.1) Charakteristisch für diese Stufe ist, daß ein Kieselsäure-Hydrogel eingesetzt wird, das einen relativ hohen Feststoffgehalt hat, weitgehend kugelförmig ist und -inbesondere - auf eine spezielle Weise hergestellt worden ist. Diese spezielle Weise der Herstellung ist in ihren Unterstuffen (1.1.1), (1.1.2) sowie (1.1.3) im einzelnen beschrieben, z.B. in der US-PS 3,872,217; eine Beschreibung der gleichen Unterstufen und zusätzlich der Unterstufe (1.1.4) findet sich z.B. in der US-PS 4,037,042. Das insoweit in den beiden genannten Patentschriften Offenbarte soll, auf dem Wege über das Zitat, ein Bestandteil der vorliegenden Beschreibung sein; - womit in dieser einschlägige nähere Darlegungen entbehrlich werden.

(1.2) Die Extraktion des Wassers aus dem Kieselsäure-Hydrogel mittels der oben bezeichneten organischen Flüssigkeit kann in üblichen Extraktionsvorrichtungen erfolgen. Geeignete Vorrichtungen sind z.B. Säulenextraktoren. Als organische Flüssigkeiten haben sich aus der Reihe der Alkanole die folgenden (nach abnehmender Wirksamkeit - nicht jedoch nach abnehmender Wirtschaftlichkeit - geordnet) bewährt: tert.-Butanol, i-Propanol, Ethanol und Methanol. Aus der Reihe der Alkanone - die insgesamt gegenüber den Alkanolen zu bevorzugen sind - hat sich vor allem Acton bewährt. Es versteht sich von selbst, daß die organische Flüssigkeit aus einem oder mehreren der in Betracht kommenden Individuen bestehen kann, wobei in jedem Fall die Flüssigkeit vor dem Extrahieren weniger als 5 und vorzugsweise weniger als 3 Gew.% Wasser enthalten sollte.

(1.3) Die Überführung des mit der organischen Flüssigkeit behandelten Gels in das Xerogel (Trocknung) kann wiederum in einschlägig üblichen Trocknungsvorrichtungen erfolgen. Dabei erhält man die besten Ergebnisse, wenn man bei Produkttemperaturen von 80 bis 200°C und Drücken von 1 bis 250 Torr trocknet, wobei man - aus Gründen des Dampfdruckes - einer steigenden Temperatur auch einen steigenden Druck zuordnen sollte et vice versa. Durch strömende Schleppgase, etwa Stickstoff, kann der Trocknungsvorgang - insbesondere bei relativ hohen Drücken - beschleunigt werden.

(1.4) Das Gewinnen von Xerogen-Teilchen mit dem erfindungswesentlichen Teilchendurchmesser kann z.B. erfolgen, indem man das aus Stufe (1.3) erhaltene Produkt schonend - d.h. insbesondere unter Vermeidung der Bildung hoher Feinanteile -mahlt, dei Teilchen mit der gesuchten Korngröße mittels luftunterstützter Siebung separiert und das Überkorn in den Mahl-Sieb-Kreislauf zurückführt.

Im Rahmen der Erfindung wird ein Katalysator eingesetzt, bei dem die Beladung in spezieller - oben umschriebener - Weise erfolgt ist.

Bei dieser speziellen Weise der Beladung kann man zweckmäßigerweise so verfahren, daß man den Trägerstoff (1) in einer Lösung von Chromtrioxid oder einer unter den Bedingungen der Stufe (3) in Chromtrioxid übergehenden Chromverbindung suspendiert (wobei die Mengen so gewählt werden, daß das gewünschte Mengenverhältnis Trägerstoff : Chrom sich ergibt) und unter dauernder, möglichst homogener Durchmischung des Ansatzes dessen flüssige Bestandteile - also Alkanon bzw. Alkanol sowie gegebenenfalls Wasser - abdampft. Hierbei ist es am zweckmäßigsten, bei Temperaturen von 20 bis 150°C und Drücken von 10 bis 760 Torr zu arbeiten. Nicht kritisch ist, wenn der mit der Chromkomponente beladene Trägerstoff noch eine gewisse Restfeuchte enthält (flüchtige Bestandteile nicht mehr als 20, insbesondere nicht mehr als 10 Gew.%, bezogen auf den Trägerstoff). - Im gegebenen Zusammenhang geeignete Chromkomponten sind vor allem Chromtrioxid sowie Chromhydroxid, ferner lösliche Salze des dreiwertigen Chroms mit einer organischen oder anorganischen Säure, wie Acetat, Oxalat, Sulfat, Nitrat; besonders geeignet sind solche Salze derartiger Säuren, die beim Aktivieren rückstandsfrei in Chromtrioxid übergehen. Auch können Chromverbindungen in Form von Chelaten eingesetzt werden, wie Chromacetylacetonat.

Die dritte Stufe (3) der Herstellung des Chromtrioxid-Katalysators dient dessen Aktivierung unter Bedingungen, die gewährleisten, daß im fertigen Katalysator das Chrom - zumindest teilweise - im sechswertigen Zustand vorliegt.

Zu den erfindungsgemäßen Verfahren als Ganzem ist schließlich das Folgende zu bemerken:

Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder - insbesondere - kontinuierliches Verfahren, sei es z.B. als Suspensions-Polymerisationsverfahren oder - insbesondere - Trockenphasen-Polymerisationsverfahren im gerührten oder gewirbelten Bett. Die erwähnten technologischen Ausgestaltungen - mit anderen Worten: die technologischen Varianten der Polymerisation von Olefinen nach Phillips - sind aus der Literatur und Praxis wohlbekannt, so daß sich nähere Ausführungen zu ihnen erübrigen. Zu bemerken ist allenfalls noch, daß die Katalysatoren außerhalb oder innerhalb des Polymerisationsgefäßes mit den Cokatalysatoren zusammengebracht werden können; im letzgenannten Fall etwa durch räumlich getrennten Eintrag der Komponenten, die im übrigen in Form einer Suspension (Katalysator) bzw. Lösung (Cokatalysator) gehandhabt werden können.

Des weiteren ist noch zu sagen, daß sich das neue Verfahren vornehmlich zum Herstellen von Homopolymerisaten des Ethens oder Copolymerisaten des Ethens mit $\alpha$-Monoolefin wie Propen, Buten-1, Hexen-1, 4-Methylpenten-1 und Okten-1 mit einer hohen bis mittleren Molmasse sowie einem sehr geringen Feinstaub- und Grobkornanteil und hoher Schüttdichte und guter Rieselfähigkeit in hoher Ausbeute, bezogen auf die eingesetzte Katalysatormenge und Polymerisationszeit (hohe Aktivität), eignet, also Polymerisatoren, wie sie z.B. beim Blasformverfahren besondere Anwendung finden.

Beispiel 1

Herstellung des Trägerstoffs (Xerogel)

Es wurde eine in der Figur US-PS 3,872,217 dargestellte Mischdüse mit folgenden Daten benutzt: Der Durchmesser der zylindrischen, aus einem Kunststoffschlauch gebildeten Mischkammern betrug 14 mm, die Mischraumlänge (einschließlich Nachmischstrecke) 350 mm. Nahe der stirnseitig verschlossenen Eintrittsseite der Mischkammer war eine tangentiale Einlaufbohrung von 4 mm Durchmesser für die Mineralsäure angebracht. Es schlossen sich vier weitere Bohrungen mit ebenfalls 4 mm Durchmesser und gleicher Einlaufrichtung für die Wasserglaslösung an, wobei der Abstand der Bohrungen voneinander, in Längsrichtung der Mischkammer gemessen, 30 mm betrug. Für die primäre Mischzone war demnach das Verhältnis von Länge zu Durchmesser etwa gleich 10. Für die sich anschließende sekundäre Mischzone lag dieses Verhältnis bei 15. Als Spritzmundstück wurde ein flachgedrücktes, leicht nierenförmig ausgebildetes

4

Rohrstück über das Austrittsende des Kunststoffschlauches geschoben.

Beschickt wurde diese Mischvorrichtung mit 325 l/h 33-gew.%iger Schwefelsäure von 20°C mit einem Betriebsdruck von ca. 3 bar sowie 1100 l/h Wasserglaslösung (hergestellt aus technischem Wasserglas mit 27 Gew.% $SiO_2$ und 8 Gew.% $Na_2O$ durch Verdünnung mit Wasser) mit einem Litergewicht von 1,20 kg/l und einer Temperatur von ebenfalls 20°C mit einem Druck von ebenfalls ca. 3 bar. In der mit dem Kunststoffschlauch ausgekleideten Mischkammer wurde durch fortschreitende Neutralisation ein unbeständiges Hydrosol mit einem pH-Wert zwischen 7 und 8 gebildet, das bis zur vollständigen Homogenisierung noch etwa 0,1 Sekunden in der Nachmischzone verblieb, bevor es durch das Düsenmundstück als flächenförmiger Flüssigkeitsstrahl in die Atmosphäre gesprizt wurde. Der Strahl zerteilt sich während des Fluges durch die Luft in einzelne Tropfen, die infolge der Oberflächenspannung in eine weitgehend kugelige Form übergingen und die noch während ihres Fluges innerhalb ca. einer Sekunde zu Hydrogel-Kugeln erstarrten. Die Kugeln hatten eine glatte Oberfläche, waren glasklar, enthielten etwa 17 Gew.% $SiO_2$ und hatten folgende Kornverteilung:

| | |
|---|---|
| >8 mm | 10 Gewichtsprozent |
| 6 - 8 mm | 45 Gewichtsprozent |
| 4 - 6 mm | 34 Gewichtsprozent |
| <4 mm | 11 Gewichtsprozent |

Die Hydrogel-Kugeln wurden am Ende ihres Fluges in einem Waschturm aufgefangen, der nahezu vollständig mit Hydrogel-Kugeln gefüllt war, und in dem die Kugeln sofort ohne Alterung mit ca. 50°C warmem, schwach ammoniakalischem Wasser in einem kontinuierlich verlaufenden Gegenstromprozeß salzfrei gewaschen wurden.

Durch Sieben isolierte man die Kugeln, die einen Durchmesser im Bereich von 2 bis 6 mm hatten und füllte 112 kg dieser Kugeln in ein Extraktionsfaß mit Zulauf an der Oberseite, einem Siebboden und einem schwanenhalsförmigen Überlauf, welcher an der Faßunterseite angeschlossen war und den Flüssigkeitsstand im Faß so hoch hielt, daß die Hydrogel-Kugeln vollkommen mit Flüssigkeit bedeckt waren. Dann ließ man solange Ethanol mit einer Geschwindigkeit von 60 l/h zulaufen, bis die Dichte des am Überlauf austretenden Ethanol-Wassergemisches bis 0,826 g/cm³ gesunken war; es waren dann etwa 95 % des in dem Hydrogel enthaltenen Wassers extrahiert.

Die dabei erhaltenen Kugeln wurden bei 180°C unter einem Vakuum von 10 Torr 8 Stunden lang getrocknet; es trat dann unter den genannten Bedingungen während 30 Minuten kein Gewichtsverlust mehr auf.

Anschließend wurden die getrockneten Kugeln mit einer Fächerschlägermühle schonend gemahlen und durch luftunterstützes Sieben die Xerogel-Teilchen isoliert, die Durchmesser von 50 bis 100 μm hatten, während die Teilchen, die Durchmesser von über 100 μm hatten, in den Mahl-Sieb-Kreislauf zurückgeführt wurden.

Herstellung des Katalysators

15 kg des oben beschriebenen Xerogels und 40 Liter einer 4,1-gew-%igen Lösung von Chrom(III)nitrat-9-hydrat in Ethanol wurden in einen Doppelkonusmischer gefüllt. Unter Rotation des von außen mit Dampf auf 130°C beheizten Mischers wurde dann im Wasserstrahlvakuum das Ethanol abdestilliert.

Das dabei resultierende Produkt wurde in einem Fließbett, welches von Luft durchströmt wurde, für 6 Stunden auf eine Temperatur von 630°C erhitzt und dann wieder abgekühlt. Ab 140°C wurde das Fließbett von Stickstoff durchspült, um Sauerstoffspuren (die bei der Polymerisation stören) zu beseitigen.

Der so gewonnene Katalysator hatte einen analytisch ermittelten Chromgehalt von rund 0,0002 mol/g.

Polymerisation

Es wurde in einem bei der kontinuierlichen Polymerisation von Ethen üblichen Reaktor gearbeitet, dessen Reaktionsraum aus einem Rohrkreis von 0,2 m³ Inhalt bestand. Der Reaktionsraum war gefüllt mit einer 40-gewichtsprozentigen Suspension von Polymerisat in Isobutan, die durch eine Propellerpumpe so rasch umgepumpt wurde, daß eine turbulente Strömung vorhanden war. In dem Reaktor wurde eine Temperatur von 104°C aufrechterhalten. Weiterhin wurden durch Regelung konstant gehalten die Menge an ein- und ausgeschleustem Suspensionsmittel (je 35 kg/h Isobutan), die Konzentration des im Suspensionsmittel gelösten monomeren Ethens (10 Vol.%) und die Konzentration des im Suspensionsmittel gelösten Comonomeren (0,3 Vol.% Buten-1). Dabei wurden im kontinuierlichstationären Betrieb bei einer Einschleusung von 2 g/h Katalysator 22 kg/h Polymerisat ausgeschleust.

Das Polymerisat hatte folgende Kenndaten:

```
HL-Schmelzindex (HLMI 190°C/21,6 kp, nach DIN 53 735)        6,7  g/10 min.
Grenzviskosität [η] (nach DIN 53 733)                        3,51 dl/g
Schüttdichte (nach DIN 53 468)                               520  g/l
Rieseltest (nach DIN 53 492)                                 66,7 g/sec
Siebanalyse (nach DIN 53 477)
        <125 μm                                              0,1  %
     125- 250 μm                                             0,9  %
     250- 500 μm                                             11,2 %
     500-1000 μm                                             73,1 %
    1000-2000 μm                                             14,7 %
       >2000 μm                                              0    %
```

Vergleichsversuch

Es wurde in Identität zum Beispiel 1 (auch hinsichtlich der Messung der Kenndaten) gearbeitet, mit den einzigen Ausnahmen, daß zur Herstellung des Katalysators Xerogel-Teilchen verwendet wurden, die einen Teilchendurchmesser von 1 bis 300 μm hatten.

Auf diese Weise entstand ein Polymerisat mit folgenden Kenndaten:

```
HL-Schmelzindex                                              6,2  g/10 min.
Grenzviskosität [η]                                          3,65 dl/g
Schüttdichte                                                 480  g/l
Rieseltest                                                   62,5 g/sec
Siebanalyse
        <125 μm                                              0,4  %
     125- 250 μm                                             2,5  %
     250- 500 μm                                             18,2 %
     500-1000 μm                                             41,4 %
    1000-2000 μm                                             37,0 %
       >2000 μm                                              0,5  %
```

Gegenüber Beispiel 1 wird im Vergleichsversuch also ein Polymerisat mit deutlich niedrigerer Schüttdichte, schlechterem Rieselverhalten sowie einer breiteren Korngrößenverteilung mit höherem Staub- und Grobkornanteil (<125 μm, >2000 μm) erhalten.

**Patentansprüche**

1. Verfahren zum Herstellen von grießförmigen Ethen-Homopolymerisaten sowie Ethen-Copolymerisaten mit untergeordneten Mengen an einpolymerisierten $C_3$- bis $C_{12}$-$\alpha$-Monoolefinen durch Polymerisation des bzw. der Monomeren bei Temperaturen von 30 bis 150°C und Drücken von 2 bis 150 bar, mittels eines Chromtrioxid-Katalysators, indem man

(1)

(1.1.1) in einen unter Drall stehenden Strom einer wäßrigen Mineralsäure längs sowie tangential zum Strom eine Natrium- bzw. Kaliumwasserglaslösung einbringt,

(1.1.2) das dabei entstehende Kieselsäure-Hydrosol in ein gasförmiges Medium tropfenförmig versprüht,

(1.1.3) das versprühte Hydrosol in dem gasförmigen Medium zum Hydrogel erstarren läßt und

(1.1.4) das so erhaltene weitgehend kugelförmige Hydrogel ohne vorherige Alterung durch Waschen von Salzen befreit,

(1.2) aus dem so erhaltenen, 10 bis 25 Gew.% Feststoff (berechnet als Siliziumdioxid) enthaltenden, Kieselsäure-Hydrogel (1.1), das weitgehend kugelförmig ist und einen Teilchendurchmesser im Bereich von 1 bis 8 mm hat, mittels einer organischen Flüssigkeit aus der Reihe der $C_1$- bis $C_4$-Alkanole und/oder $C_3$- bis $C_5$-Alkanone mindestens 60 % des in dem Hydrogel enthaltenen Wassers extrahiert und

(1.3) das dabei erhaltene entwässerte, mit der organischen Flüssigkeit behandelte Gel solange trocknet, bis bei 180°C unter einem Vakuum von 10 Torr während 30 Minuten kein Gewichtsverlust mehr auftritt (Xerogel-Bildung)

und den so erhaltenen feinteiligen, porösen, aus Siliziumdioxid bestehenden bzw. auf Siliziumdioxid basierenden Trägerstoff mit

(2) Chromtrioxid oder einer unter den Bedingungen der Stufe (3) in Chromtrioxid übergehenden Chromverbindung im Gewichtsverhältnis Trägerstoff : Chrom von 100 : 0,1 bis 100 : 10 belädt, und dann

(3) das aus Stufe (2) resultierende Zwischenprodukt in einem wasserfreien, Sauerstoff in einer Konzentration von über 10 Volumenprozent enthaltenden Gasstrom 10 bis 1000 Minuten auf einer Temperatur von 400 bis 1100°C hält,

und man den so erhaltenen Chromtrioxid-Katalysator in der Polymerisation einsetzt, dessen Trägerstoff (1) einen Teilchendurchmesser im Bereich von 50 bis 150 $\mu$m, ein Porenvolumen von 1 bis 3 cm$^3$/g sowie eine Oberfläche von 200 bis 600 m$^2$/g besitzt, mit der weiteren Maßgabe, daß die Differenz zwischen dem Teilchendurchmesser der größten Teilchen und dem Teilchendurchmesser der kleinsten Teilchen höchstens 50 $\mu$m beträgt und in der zweiten Stufe (2) den Trägerstoff aus einer 0,05- bis 5-gew.%igen Lösung von Chromtrioxid in einem $C_3$- bis $C_5$-Alkanon oder einer 0,05- bis 15-gew.%igen Lösung einer unter den Bedingungen der Stufe (3) in Chromtrioxid übergehenden Chromverbindung in einem $C_1$-bis $C_4$-Alkanol - wobei das jeweilige Lösungsmittel nicht mehr als 20 Gew.% Wasser enthalten darf - heraus unter Verdampfen des Lösungsmittels mit der geforderten Menge Chrom belädt.

## Claims

1. A process for preparing a granular ethene homopolymer or copolymer with a minor amount of copolymerized $C_3$-$C_{12}$-$\alpha$-monoolefin by polymerizing the monomer(s) at from 30 to 150°C and under from 2 to 150 bar by means of a chromium trioxide catalyst by

   (1)

      (1.1.1) introducing a sodium waterglass or potassium waterglass solution into a swirling stream of an aqueous mineral acid longitudinally and also tangentially to the stream,

      (1.1.2) spraying the resulting silica hydrosol in droplet form into a gaseous medium,

      (1.1.3) allowing the sprayed hydrosol to solidify to the hydrogel in the gaseous medium and

      (1.1.4) freeing the substantially spherical hydrogel thus obtained from salts by washing, without prior aging,

      (1.2) extracting not less than 60% of the water present in the hydrogel by means of an organic liquid from the series of $C_1$-$C_4$-alkanols and/or $C_3$-$C_5$-alkanones from the silica hydrogel (1.1) thus obtained having a solids content (calculated as silicon dioxide) from 10 to 25% by weight, a substantially spherical shape and a particle diameter within the range from 1 to 8 mm, and

      (1.3) drying the resulting dewatered gel which has been treated with the organic liquid until at 180°C under a reduced pressure of 10 mmHg no further weight loss occurs in the course of 30 minutes (xerogel formation) and loading the finely divided, porous carrier material thus obtained which consists of or contains silicon dioxide with

   (2) chromium trioxide, or a chromium compound which, under the conditions of stage (3), converts into chromium trioxide, in a weight ratio of carrier material : chromium from 100 : 0.1 to 100 : 10, and then

   (3) maintaining the intermediate resulting from stage (2) at from 400 to 1100°C in an anhydrous gas stream containing oxygen in a concentration of over 10 percent by volume for from 10 to 1000 minutes,

   and using the resulting chromium trioxide catalyst in the polymerization, the carrier material (1) of which has a particle diameter within the range from 50 to 150 $\mu$m, a pore volume of from 1 to 3 cm$^3$/g and a surface area of from 200 to 600 m$^2$/g, with the further proviso that the difference between the particle diameter of the largest particles and the particle diameter of the smallest particles is not more than 50 $\mu$m, and by loading in the second stage (2) the carrier material with the required amount of chromium from a 0.05 to 5% strength by weight solution of chromium trioxide in a C$_3$-C$_5$-alkanone or from a 0.05 to 15% strength by weight solution in a C$_1$-C$_4$-alkanol of a chromium compound which converts into chromium trioxide under the conditions of stage (3), where the solvent may in neither case contain more than 20% by weight of water, with evaporation of the solvent.

## Revendications

1. Procédé de préparation d'homopolymères granuleux d'éthylène ainsi que de copolymères granuleux d'éthylène avec de faibles quantités d'$\alpha$-monooléfines en C$_3$ à C$_{12}$ en liaison polymère, par polymérisation du ou des monomères à des températures de 30 à 150°C et des pressions de 2 à 150 bar, à l'aide d'un catalyseur au trioxyde de chrome, dans lequel

(1)

(1.1.1.) on introduit une solution de silicate de sodium ou de potassium dans un courant tourbillonnant d'un acide minéral aqueux, longitudinalement et tangentiellement au courant,

(1.1.2) on pulvérise en gouttelettes l'hydrosol d'acide silicique ainsi obtenu dans un milieu gazeux,

(1.1.3) on laisse l'hydrosol pulvérisé dans le milieu gazeux se solidifier en hydrogel et

(1.1.4) on débarrasse des sels par lavage l'hydrogel largement sous forme de billes ainsi obtenu sans vieillissement préalable,

(1.2) on entrait au moins 60% de l'eau contenue dans l'hydrogel d'acide silicique (1.1), contenant de 10 à 25% de matières solides (exprimées en dioxyde de silicium), qui est largement sous forme de billes et a un diamètre de particules de 1 à 8 mm, à l'aide d'un liquide organique de la série des alcanols en C$_1$-C$_4$ et/ou des alcanones en C$_3$-C$_5$ et

(1.3) on sèche le gel traité par le liquide organique et déshydraté ainsi obtenu jusqu'à ce qu'il ne se produise plus de perte de poids à 180°C sous un vide de 10 torr pendant 30 minutes (formation de xérogel)

et on charge le support à base de dioxyde de silicium ou se composant de dioxyde de silicium poreux et finement divisé ainsi obtenu avec

(2) du trioxyde de chrome ou un composé du chrome se transformant en trioxyde de chrome dans les conditions de l'étape (3), dans un rapport pondéral support : chrome de 100 : 0,1 à 100 : 10, et ensuite

(3) on chauffe le produit intermédiaire résultant de l'étape (2) dans un courant gazeux anhydre contenant de l'oxygène à une concentration de plus de 10% en volume, pendant 10 à 1000 mn à une température de 400 à 1100°C,

et on utilise dans la polymérisation le catalyseur de trioxyde de chrome ainsi obtenu, dont le support (1) a un diamtre de particules compris entre 50 et 150 $\mu$m, un volume de pores de 1 à 3 cm$^3$/g ainsi qu'une surface spécifique de 200 à 600 m$^2$/g, avec la condition supplémentaire que la différence entre le diamètre des plus grosses particules et le diamètre des plus petites particules se monte au plus à 50 $\mu$m et

dans la deuxième étape (2), on charge le support de la quantité voulue de chrome à partir d'une solution à 0,005-5% en poids de trioxyde de chrome dans une alcanone en C$_3$-C$_5$ ou d'une solution à 0,05-15% en poids dans un alcanol en C$_1$-C$_4$ d'un composé du chrome se transformant en trioxyde de chrome dans les conditions de l'étape (3), le solvant dans chaque cas ne devant pas contenir plus de 20% en poids d'eau, avec évaporation du solvant.